# EUROPÄISCHE PATENTSCHRIFT

(11) **EP 3 186 879 B1**
(45) Veröffentlichungstag und Bekanntmachung des Hinweises auf die Patenterteilung: **11.12.2019**
(21) Anmeldenummer: 15753359.7
(22) Anmeldetag: 19.08.2015
(51) Int. Cl.: H02P 3/08, H02P 6/14

(54) **VERFAHREN ZUM BREMSEN EINES VERDICHTERS UND VERDICHTER EINES KÄLTEGERÄTES, KLIMAGERÄTS ODER EINER WÄRMEPUMPE SOWIE KÄLTEGERÄTES, KLIMAGERÄTS ODER WÄRMEPUMPE DAMIT**
METHOD FOR BRAKING A COMPRESSOR AND COMPRESSOR OF A REFRIGERATION DEVICE, OF AN AIR CONDITIONING DEVICE, OR OF A HEAT PUMP, AND REFRIGERATION DEVICE, AIR CONDITIONING DEVICE, OR HEAT PUMP HAVING SAID COMPRESSOR
PROCÉDÉ DE FREINAGE D'UN COMPRESSEUR ET COMPRESSEUR D'UN APPAREIL DE FROID, D'UN APPAREIL DE CLIMATISATION OU D'UNE POMPE À CHALEUR, AINSI QU'APPAREIL DE FROID, APPAREIL DE CLIMATISATION OU POMPE À CHALEUR ÉQUIPÉS DUDIT COMPRESSEUR

(30) Priorität: 26.08.2014 DE 102014217005
(43) Veröffentlichungstag der Anmeldung: 05.07.2017
(73) Patentinhaber: BSH Hausgeräte GmbH, 81739 München (DE)
(72) Erfinder: BECKMANN, Tommy, 78591 Durchhausen (DE); PAULDURO, Achim, 89129 Albeck (DE)
(86) Internationale Anmeldenummer: PCT/EP2015/069041
(87) Internationale Veröffentlichungsnummer: WO 2016/030250

(56) Entgegenhaltungen:
- DE-A1-102010 030 239
- JP-A- 2012 244 869
- JP-A- 2013 059 194
- US-A1- 2008 224 641

## Beschreibung

Die vorliegende Erfindung betrifft ein Verfahren zum Bremsen eines Verdichters und einen Verdichter eines Kältegerätes, insbesondere eines Haushaltskältegerätes, eines Klimageräts oder einer Wärmepumpe sowie ein Kältegerätes, Klimageräts oder einer Wärmepumpe damit. Die Erfindung betrifft insbesondere Verdichter mit bürstenlosen Motoren wie Permanentmagnet-Synchronmotoren, PMSM (permanent-magnet synchronous motor), und Bürstenlose Gleichstrommotoren, BLDC-Motoren (brushless direct current motor).

PMSM und BLDC-Motoren werden beispielsweise als Kompressorantrieb in Kältegeräten, Klimageräten oder einer Wärmepumpen verwendet. Solche Elektromotoren weisen Wicklungen in einem Stator und einen Rotor auf, der einen Permanentmagneten umfasst. Werden die Wicklungen von Strom durchflossen, so erzeugen sie ein Magnetfeld welches auf den Permanentmagneten ein Drehmoment ausübt und somit den Rotor in Bewegung versetzt. Durch abwechselndes Ansteuern der verschiedenen Wicklungen im Stator wird ein drehendes Magnetfeld erzeugt, welches somit den Rotor antreibt.

Eine Drehzahlregelung von PMSM und sensorlosen BLDC Motoren erfolgt oberhalb einer Drehzahlmarke, ab der die Position des Rotors zuverlässig durch Messung von induzierten Spannungen in den Statorwicklungen ermittelt werden kann. Das Hochfahren des Motors zu dieser Drehzahlmarke erfolgt mit einer Anfahrschaltung. Bei Erreichen der Drehzahlmarke übernimmt eine Drehzahlregelung die Ansteuerung und Einhaltung einer angeforderten Drehzahl und verwendet dabei die Ermittlung der Rotorposition.

Kompressoren beziehungsweise Verdichter in Haushaltskältegeräten weisen eine elektrisch angetriebene Pumpe in einem hermetisch abgeschlossenen Gehäuse, der Verdichterschale, auf. PMSM und BLDC-Motoren werden häufig in drehzahlgeregelten Verdichtern mit einem großen Drehzahlbereich eingesetzt. Dabei ist das Lastmoment über eine Motordrehung ungleich verteilt mit einer schmalen Spitze um den oberen Totpunkt eines Verdichterkolbens, der sich in einem Zylinder bewegt.

Entsprechend ist bei einer Auslegung eines Verdichters eine Schwingungsfähigkeit der Mechanik zu berücksichtigen und es ist ein Betrieb des Motors in Resonanzfrequenzen zu vermeiden. Im Betrieb ist die Vermeidung von Resonanzfrequenzen seitens einer Steuerung systematisch zu erreichen, da die Bereiche der Resonanzfrequenzen für eine Baureihe bekannt sind. Ein Hochfahren ist ebenfalls unproblematisch, da über Resonanzbereiche schnell hinweg beschleunigt wird. Die DE 10 2010 030 239 A1 beschreibt den Anlauf eines BLDC Motors.

Beim Abschalten eines Verdichters wird üblicherweise zunächst mit der Drehzahlregelung die Drehzahlmarke angefahren. Dann besteht die Situation, dass üblicherweise einerseits keine der Anfahrschaltung entsprechende Bremsschaltung verwendet wird, da der Verdichter ja nach Abschalten des Stromes von selber langsamer wird. Andererseits kann unterhalb der Drehzahlmarke die Drehzahlregelung nicht verwendet werden, da die Position des Rotors nicht mehr zuverlässig durch Messung von induzierten Spannungen aufgrund der Back EMF in den Statorwicklungen ermittelt werden kann. Bei einem Freilauf des Verdichters könnte eine Resonanzfrequenz getroffen werden und der Verdichterantrieb könnte gegen die Verdichterschale schlagen.

Gemäß dem Stand der Technik wird dies vermieden, indem beim Abbremsen die unteren Schalter einer Wechselrichterbrücke alle Wicklungsstränge unterhalb der Drehzahlmarke kurzgeschlossen werden. Der Motor wird so mittels Kurzschluss schnell abgebremst.

Der Nachteil dieses Standes der Technik ist, dass bei diesem Abbremsen mit unbekannten Kräften eine aufwändige robuste Pumpenauslegung erforderlich ist und trotzdem das Risiko verbleibt, dass eine Resonanzfrequenz getroffen werden kann und die Pumpe gegen die Verdichterschale schlägt.

Es ist die Aufgabe der Erfindung, einen Verdichter eines Kältegerätes, insbesondere eines Haushaltskältegerätes, eines Klimageräts oder einer Wärmepumpe derart abzubremsen, dass er eine weniger aufwändige Pumpenauslegung erfordert und dass ein Anschlagen der Pumpe an die Verdichterschale möglichst vermieden wird.

Diese Aufgabe wird mit dem Verfahren zum Bremsen eines Verdichters und dem Verdichter eines Kältegerätes, eines Klimageräts oder einer Wärmepumpe gemäß den unabhängigen Ansprüchen gelöst. Das erfindungsgemäße Verfahren zum Bremsen eines Verdichters eines Kältegerätes, eines Klimageräts oder einer Wärmepumpe, wobei der Verdichter einen PMSM und BLDC Motor mit Wicklungen aufweist, beginnt mit Verfahrensschritt
a), dem Drehen des Motors mit einer Betriebsdrehzahl als Ausgangssituation, in der gemäß Verfahrensschritt b) ein Signal zum Abbremsen erhalten wird. Daraufhin werden in Verfahrensschritt c) in den Wicklungen induzierte Spannungen ermittelt und in Verfahrensschritt d) die Wicklungen mit einem Bremsstrom mit einer abnehmenden Frequenz bestromt, wobei der Bremsstrom während des Bremsens abhängig von den zuvor ermittelten induzierten Spannungen ist.

Der erfindungsgemäße Verdichter weist einen PMSM und BLDC Motor mit Wicklungen und eine Steuerung zum Bremsen des Motors ausgehend von einer Betriebsdrehzahl auf, wobei die Steuerung eingerichtet ist, den Motor mit einem Bremsstrom abzubremsen, wobei der Bremsstrom während des Bremsens abhängig von vor dem gesteuerten Bremsen ermittelten induzierten Spannungen ist.

Die Erfindung betrifft ein Gerät mit einem Kältekreislauf mit einem Verdichter, insbesondere ein Kältegerät, ein Klimageräts oder eine Wärmepumpe. Zur sprachlichen Vereinfachung wird die Erfindung lediglich an einem Kältegerät erläutert.

Bei dem erfindungsgemäßen Bremsen werden zunächst die induzierten Spannungen aufgrund der Gegen-EMK (Gegen-Elektromotorische Kraft auch Back EMF, Back electromagnetic force) ermittelt, und zusätzlich die Motorströme gemessen, die die momentane Last repräsentieren. Im Kältegerät wäre das die momentane Last des in einem Kältekreislauf eingebundenen Verdichters, die im wesentlichen von den momentanen Drücken im Verdampfer und im Verflüssiger abhängt. Der Druck im Verdampfer bestimmt die pro Motorumlauf geförderte Kältemittelmenge, die gegen den Druck im Verflüssiger gefördert beziehungsweise verdichtet wird. Üblicherweise werden PMSM und BLDC Motoren mit drei jeweils um 120° versetzten Drehstromphasen betrieben. Aus zwei gemessenen induzierten Spannungen kann die dritte bestimmt werden.

Das Bremsen erfolgt, indem die Drehzahl auf einer vorgegebenen Drehzahlkurve gesteuert wird, wobei die Rotorposition nicht berücksichtigt wird. Es wird angenommen, dass sich die momentane Last während des Bremsens nicht wesentlich verändert, da die momentane Last von den sich nur langsam ändernden Betriebsbedingungen bestimmt wird. Dies wird erfindungsgemäß ausgenutzt, indem die Drehzahl gesteuert auf einer vorgegebenen Drehzahlkurve reduziert wird mit einer Bestromung, die von der vor dem gesteuerten Bremsen bestimmten momentanen Last abhängt. Die Frequenz der ermittelten induzierten Spannungen bzw. die Drehzahl zum Zeitpunkt der Ermittlung der induzierten Spannungen kann als weitere Größe in die Bemessung der Bestromung eingehen. Die Berücksichtigung der induzierten Spannungen und damit der momentanen Last bei der Bemessung der Bestromung stellt sicher, dass der Rotor beim Bremsen von dem gesteuerten Statorfeld zuverlässig mitgenommen wird. Dadurch ist sichergestellt, dass die tatsächliche Drehzahl des Rotors zu jedem Zeitpunkt des Bremsens wohldefiniert ist, auch im unteren Drehzahlbereich, in dem die Rotorposition und damit die Drehzahl nicht zuverlässig durch induzierte Spannungen bestimmt werden kann, weil diese Spannungen zu klein sind.

Gemäß einer Ausgestaltung der vorliegenden Erfindung erfolgt das Signal zum Abbremsen in Form einer vorgewählten Drehzahl kleiner als die Betriebsdrehzahl, insbesondere in Form einer vorgewählten Drehzahl null. Das Bremsen des Motors auf die Drehzahl null, also ein Anhalten des Motors, ist der übliche Anwendungsfall. Das Abbremsen funktioniert aber auch auf geringe endliche Drehzahlen.

Gemäß einer weiteren Ausgestaltung der vorliegenden Erfindung wird zur Bestimmung des Bremsstroms aus den ermittelten induzierten Spannungen ein Lastmoment ermittelt. Dies ermöglicht eine Steuerung auf die physikalische Größe des Lastmoments.

Gemäß einer weiteren Ausgestaltung der vorliegenden Erfindung erfolgt nach Erhalten des Signals zum Abbremsen ein Anfahren einer Grenzdrehzahl mittels einer Drehzahlregelung, die bei Erreichen der Grenzdrehzahl ausgeschaltet wird. Diese Drehzahlregelung kann eine konventionelle Drehzahlregelung, insbesondere mit einem rampenförmigen Drehzahlverlauf, sein. Bevorzugt wird der Motor mit einer Betriebsdrehzahl oberhalb der Grenzdrehzahl betrieben, wobei die Grenzdrehzahl eine Drehzahl ist, oberhalb der eine Regelung des Motors auf eine Drehzahl mit Hilfe einer Bestimmung einer Rotorlage mittels gemessenen induzierten Spannungen erfolgt.

Diese Ausgestaltungen betreffen den bevorzugten Fall, dass von einer Betriebsdrehzahl ausgehend zunächst mit Hilfe einer in der Steuerung vorhandenen konventionellen Drehzahlregelung eine Grenzdrehzahl angefahren wird. Die Grenzdrehzahl ist vorzugsweise die unterste Drehzahl, für die die Drehzahlregelung zugelassen ist. Bei der Grenzdrehzahl beendet die Drehzahlregelung die Ansteuerung des Motors und die erfindungsgemäße Bremssteuerung übernimmt die Ansteuerung des Motors. Es wird darauf hingewiesen, dass die erfindungsgemäße Bremssteuerung auch bei höheren Drehzahlen als der Grenzdrehzahl funktioniert und eingesetzt werden kann.

Vorteilhaft erfolgt das Bestromen der Wicklungen mit einem Bremsstrom mit einer rampenartig abnehmenden Frequenz. Dies hat den Vorteil einer einfachen Umsetzung der Steuerung.

Gemäß einer weiteren Ausgestaltung der vorliegenden Erfindung erfolgt nach einem Abbremsen auf die Drehzahl null eine Ermittlung der induzierten Spannungen. Dies ermöglicht ein Überprüfen des Stillstands des Motors, wenn nämlich keine induzierten Spannungen mehr ermittelbar sind.

Vorteilhaft wird nach dem Abbremsen die Bestromung abgeschaltet um Energie zu sparen.

Gemäß einer weiteren Ausgestaltung der vorliegenden Erfindung erfolgt die Bestromung der Wicklungen des Motors mit einem im Wesentlichen sinusförmigen Strom. Dies ist die bevorzugte Wellenform für jede der Wicklungen des Motors, insbesondere eines PMSM.. Dies ermöglicht die Anwendung einer Raumzeigermodulation für die Steuerung. Vorzugsweise wird der im Wesentlichen sinusförmige Strom mittels einer Pulsweitenmodulation erzeugt.

Ein erfindungsgemäßes Kältegerät ist mit einem Verdichter wie vorbeschrieben ausgestattet. Ein solches Kältegerät kann störende Abschaltgeräusche des Verdichters vermeiden und mit einer weniger aufwändigen Pumpenaufhängung produziert werden.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Weitere Merkmale und Vorteile der Erfindung ergeben sich aus der nachfolgenden Beschreibung von Ausführungsbeispielen unter Bezugnahme auf die beigefügten Figuren. Dabei zeigen
- Fig. 1: ein Ersatzschaltbild eines Elektromotors, welcher als bürstenloser Motor, wie PMSM oder BLDC-Motor ausgebildet ist, eines erfindungsgemäßen Verdichters,
- Fig. 2: ein Flussdiagramm eines erfindungsgemäßen Verfahrens, und
- Fig. 3: ein Diagramm mit einer Drehzahlkurve zum Bremsen eines erfindungsgemäßen Verdichters.

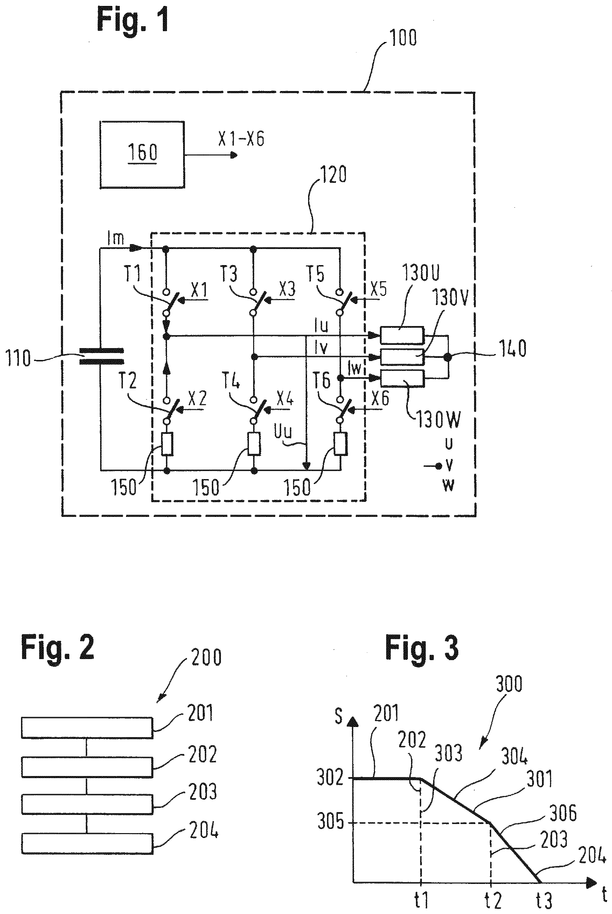

Fig. 1 zeigt ein Ersatzschaltbild eines bürstenlosen Motors 100, welcher beispielsweise als Kompressorantrieb in einem Kühlschrank verwendet werden kann. Der bürstenlose Motor 100 weist eine Spannungsquelle 110, einen Wechselrichter 120, drei Motorwicklungen bzw. Wicklungen 130U, 130V, 130W und eine Steuerung 160 auf.

Die Spannungsquelle 110 stellt eine Zwischenkreisspannung zwischen einem Zwischenkreisversorgungspotential und einer Zwischenkreismasse bereit. Der Wechselrichter 120 weist sechs Schalter T1 bis T6 auf, welche in Form einer B6-Brücke angeordnet sind und die Wicklungen 130U, 130V und 130W mit Strom versorgen. Genauer sind jeweils zwei Schalter T1 und T2, T3 und T4 bzw. T5 und T6 in Reihe zwischen dem Zwischenkreisversorgungspotential und der Zwischenkreismasse angeschlossen. Die Knoten zwischen den Schaltern T1 und T2, T3 und T4 bzw. T5 und T6 sind jeweils mit einer Seite der Wicklungen 130U, 130V und 130W verbunden. An ihrer anderen Seite sind die Wicklungen 130U, 130V und 130W mit einem Sternpunkt 140 verbunden. Ferner sind jeweils zwischen den Schaltern T2, T4 sowie T6 und der Zwischenkreismasse Shunt-Widerstände 150 vorgesehen.

Die Schalter T1 bis T6 können beispielsweise jeweils einen Leistungstransistor und eine dazu parallel geschaltete Freilaufdiode umfassen. Die Schalter T1 bis T6 werden mittels Steuersignalen X1 bis X6 angesteuert, die von einer Steuerung 160, bereitgestellt werden. Die Steuerung 160 entspricht dabei einer Vorrichtung zum Steuern eines Elektromotors. Dabei werden die Wicklungen 130 derart angesteuert, dass ein rotierendes Magnetfeld erzeugt wird, in welchem ein einen Permanentmagneten umfassender Rotor rotiert. Der Motor ist also ein Permanentmagnet-Synchronmotor mit drei Wicklungen 130U, 130V und 130W, der mittels des B6-Wechselrichters 120 mit einer dreiphasigen Spannung gespeist wird, wobei Erregerströme lu, lv und lw durch die Wicklungen 130U, 130V und 130W erzeugt werden.

Der erfindungsgemäße Verdichter eines Kältegerätes weist einen bürstenlosen Motor 100 mit Wicklungen 130U, 130V und 130W und eine Steuerung 160 zum Bremsen des Motors ausgehend von einer Betriebsdrehzahl auf, wobei die Steuerung 160 eingerichtet ist, den bürstenlosen Motor 100 mit einem Bremsstrom gesteuert abzubremsen, wobei der Bremsstrom während des Bremsens abhängig von vor dem gesteuerten Bremsen ermittelten induzierten Spannungen ist.

Die weiteren Eigenschaften der Steuerung 160 werden in der folgenden Beschreibung des erfindungsgemäßen Verfahrens deutlich.

Fig. 2 zeigt ein Flussdiagramm 200 eines erfindungsgemäßen Verfahrens zum Bremsen eines Verdichters eines Kältegerätes, wobei der Verdichter einen bürstenlosen Motor mit Wicklungen aufweist, wie den aus Fig. 1 bekannten bürstenlosen Motor 100 mit Wicklungen 130U, 130V und 130W sowie der Steuerung 160.

Das Verfahren beginnt mit Verfahrensschritt a), dem Drehen 201 des Motors mit einer Betriebsdrehzahl als Ausgangssituation, in der gemäß Verfahrensschritt b) ein Signal 202 zum Abbremsen erhalten wird. Daraufhin werden in Verfahrensschritt c) in den Wicklungen 203 induzierten Spannungen ermittelt und in Verfahrensschritt d) die Wicklungen 204 mit einem Bremsstrom mit einer abnehmenden Frequenz bestromt, wobei der Bremsstrom während des Bremsens abhängig von den vor dem gesteuerten Bremsen ermittelten induzierten Spannungen ist.

Fig. 3 zeigt zur ein Diagramm 300 mit einer Drehzahlkurve 301 zum Bremsen eines erfindungsgemäßen Verdichters, an der die einzelnen Verfahrensschritte nachvollzogen werden können und in der mehrere Ausführungsformen erläutert werden. In Diagramm 300 ist die Drehzahl S über die Zeit t aufgetragen.

Gemäß der in Diagramm 300 dargestellten Ausführungsform der Erfindung beginnt das Verfahren mit Verfahrensschritt a), dem Drehen 201 des Motors mit einer konstant dargestellten Betriebsdrehzahl 302 als Ausgangssituation. Zum Zeitpunkt t1 erhält die Steuerung entsprechend Verfahrensschritt b), 202 ein Signal 303 zum Abbremsen. Im dargestellten Ausführungsbeispiel erfolgt das Signal zum Abbremsen in Form einer vorgewählten Drehzahl null. Bis zum Zeitpunkt t1 regelt eine Drehzahlregelung den Motor. Mit Erhalten des Signals 303 übernimmt die erfindungsgemäße Steuerung die Steuerung des Motors.

In Diagramm 300 ist nun eine Ausführungsform dargestellt, gemäß der die Drehzahl zum Zeitpunkt des Signals 303 zum Abbremsen noch im Bereich der Drehzahlregelung ist. Die erfindungsgemäße Steuerung nutzt dies, um nach Erhalten des Signals 303 zum Abbremsen mit der konventionellen Drehzahlregelung zunächst eine Grenzdrehzahl 305 mit einem rampenförmigen Drehzahlverlauf 304 anzufahren. Die Grenzdrehzahl 305 ist die untere Grenze des Regelbereichs der Drehzahlregelung. Die Grenzdrehzahl 305 wird im Zeitpunkt t2 erreicht, worauf hin die konventionelle Drehzahlregelung ausgeschaltet wird.

Nun werden in Verfahrensschritt c) in den Wicklungen induzierte Spannungen ermittelt, 203, somit erfasst die Steuerung mittelbar die aktuelle Last bei der momentanen Drehzahl, hier der Grenzdrehzahl 305.

Mit Berücksichtigung dieser Information wird nun gesteuert gebremst, wobei gemäß Verfahrensschritt d) nun in die Wicklungen mit einem Bremsstrom mit einer abnehmenden Frequenz bestromt werden, 204. Bei diesem gesteuerten Bremsen ist der Bremsstrom während des Bremsens abhängig von den vor dem gesteuerten Bremsen ermittelten induzierten Spannungen. Dabei wird der Motor auf einer vorgegebenen Drehzahlkurve, hier mit einem rampenförmigen Drehzahlverlauf 306 abgebremst, bis im Zeitpunkt t3 Stillstand erreicht ist.

Der Stillstand des Motors kann überprüft werden, indem keine induzierten Spannungen mehr ermittelbar sind. Nach dem Abbremsen wird die Bestromung abgeschaltet.

Das Bremsen erfolgt, indem die Drehzahl auf einer vorgegebenen Drehzahlkurve gesteuert wird, wobei die Rotorposition nicht laufend kontrolliert werden muss.

Es sei darauf hingewiesen, dass der in dieser Ausführungsform gezeigte Abschnitt mit dem geregelten Anfahren der unteren Grenzfrequenz, dargestellt durch den Drehzahlverlauf 304, entfallen kann. Dazu könnten sofort mit Erhalten des Signals zum Abbremsen in t1 die in den Wicklungen induzierten Spannungen ermittelt werden und sofort zum gesteuerten Bremsen verwendet werden.

Weiterhin wäre es möglich, sofort mit Erhalten des Signals zum Abbremsen in t1 die in den Wicklungen induzierten Spannungen zu ermitteln und diese Spannungen erst nach t2 zum gesteuerten Bremsen des Motor auf einer vorgegebenen Drehzahlkurve zum verwenden. Die von außen vorgegebenen Lastverhältnisse verändern sich nämlich zwischen t1 und t2 höchstens unwesentlich.

In einem Verdichter eines Kältegerätes mit einem bürstenlosen Motor 100 mit Wicklungen 130U, 130V, 130W und einer Steuerung 160 zum Bremsen des Motors ausgehend von einer Betriebsdrehzahl, ist die Steuerung 160 eingerichtet, den Motor mit einem Bremsstrom gesteuert abzubremsen, wobei der Bremsstrom während des gesteuerten Bremsens abhängig von vor dem gesteuerten Bremsen, in Diagramm 300 also vor Beginn des Drehzahlverlaufs 306, ermittelten induzierten Spannungen ist.

Gemäß einer weiteren Ausführungsform der vorliegenden Erfindung erfolgt die Bestromung der Wicklungen des Motors mit einem im Wesentlichen sinusförmigen Strom, der mittels einer Pulsweitenmodulation erzeugt wird. Aufgrund der induktiven Trägheit werden pulsweitenmodulierte Spannungen in gesteuerte Ströme abgebildet, so dass beispielsweise im Wesentlichen ein sinusförmiger Strom erhalten wird.

### Bezugszeichenliste:

- 100: Motor
- 110: Spannungsquelle
- 120: Wechselrichter
- 130U, 130V, 130W: Wicklungen
- 140: Sternpunkt
- 150: Widerstand
- 160: Steuerung
- 200: Flussdiagramm
- 201: Drehen des Motors mit einer Betriebsdrehzahl
- 202: Erhalten eines Signals zum Abbremsen
- 203: Ermitteln von in den Wicklungen induzierten Spannungen
- 204: Bestromen der Wicklungen mit einem Bremsstrom
- 300: Diagramm
- 301: Drehzahlkurve
- 302: Betriebsdrehzahl
- 303: Signal zum Abbremsen
- 304: Drehzahlverlauf
- 305: Grenzdrehzahl
- 306: Drehzahlverlauf
- T1 ... T6: Schalter
- t1, t1: Zeitpunkte

## Patentansprüche

1. Verfahren zum Bremsen eines Verdichters eines Kältegerätes, Klimageräts oder einer Wärmepumpe, wobei der Verdichter einen bürstenlosen Motor (100) mit Wicklungen (130U, 130V, 130W) aufweist, **gekennzeichnet durch** die Verfahrensschritte
a) Drehen (201) des Motors mit einer Betriebsdrehzahl;
b) Erhalten (202) eines Signals zum Abbremsen;
c) Ermitteln (203) von in den Wicklungen induzierten Spannungen;
d) Bestromen (204) der Wicklungen mit einem Bremsstrom mit einer abnehmenden Frequenz, wobei der Bremsstrom während des Bremsens abhängig von den zuvor ermittelten induzierten Spannungen ist.

2. Verfahren nach Anspruch 1, **dadurch gekennzeichnet, dass** das Signal zum Abbremsen in Form einer vorgewählten Drehzahl kleiner als die Betriebsdrehzahl (302) erfolgt.

3. Verfahren nach Anspruch 2, **dadurch gekennzeichnet, dass** das Signal (303) zum Abbremsen in Form einer vorgewählten Drehzahl null erfolgt.

4. Verfahren nach einem der vorhergehenden Ansprüche, **dadurch gekennzeichnet, dass** zu einer Bestimmung des Bremsstroms (in 204) aus den ermittelten induzierten Spannungen ein Lastmoment ermittelt wird.

5. Verfahren nach einem der vorhergehenden Ansprüche, **dadurch gekennzeichnet, dass** nach Erhalten (202) des Signals zum Abbremsen ein Anfahren einer Grenzdrehzahl (305) mittels einer Drehzahlregelung erfolgt, die bei Erreichen der Grenzdrehzahl ausgeschaltet wird.

6. Verfahren nach Anspruch 5, **dadurch gekennzeichnet, dass** das Anfahren der Grenzdrehzahl (305) mittels einer konventionellen Drehzahlregelung, insbesondere rampenförmig, erfolgt.

7. Verfahren nach Anspruch 5 oder 6, **dadurch gekennzeichnet, dass** der bürstenlose Motor (100) mit einer Betriebsdrehzahl (302) oberhalb der Grenzdrehzahl (305) betrieben wird, wobei die Grenzdrehzahl eine Drehzahl ist, oberhalb der eine Steuerung (160) des Motors mit Hilfe einer Bestimmung einer Rotorlage mittels gemessenen induzierten Spannungen erfolgt.

8. Verfahren nach einem der vorhergehenden Ansprüche, **dadurch gekennzeichnet, dass** das Bestromen (204) der Wicklungen mit einem Bremsstrom mit einer rampenartig abnehmenden Frequenz erfolgt.

9. Verfahren nach einem der vorhergehenden Ansprüche, **dadurch gekennzeichnet, dass** nach einem Abbremsen auf die Drehzahl null eine Messung von induzierten Spannungen erfolgt.

10. Verfahren nach einem der vorhergehenden Ansprüche, **dadurch gekennzeichnet, dass** nach dem Abbremsen die Bestromung abgeschaltet wird.

11. Verfahren nach einem der vorhergehenden Ansprüche, **dadurch gekennzeichnet, dass** die Bestromung mit einem im Wesentlichen sinusförmigen Strom erfolgt.

12. Verfahren nach Anspruch 11, **dadurch gekennzeichnet, dass** der im Wesentlichen sinusförmige Strom mittels Pulsweitenmodulation erzeugt wird.

13. Verdichter eines Kältegerätes, Klimageräts oder einer Wärmepumpe, mit einem bürstenlosen Motor (100) mit Wicklungen (130U, 130V, 130W) und einer Steuerung (160) zum Bremsen des Motors ausgehend von einer Betriebsdrehzahl, **dadurch gekennzeichnet, dass** die Steuerung (160) eingerichtet ist, den bürstenlosen Motor (100) mit einem Bremsstrom abnehmender Frequenz gesteuert abzubremsen, wobei der Bremsstrom während des gesteuerten Bremsens abhängig von vor dem gesteuerten Bremsen ermittelten induzierten Spannungen ist.

14. Verdichter nach Anspruch 13, ausgestattet zur Durchführung des Verfahrens nach einem der Ansprüche 1 bis 12.

15. Kältegerät, Klimageräts oder Wärmepumpe mit einem Verdichter nach einem der Ansprüche 13 oder 14.

## Claims

1. Method for braking a compressor of a refrigeration appliance, of an air conditioning appliance or of a heat pump, wherein the compressor has a brushless motor (100) with windings (130U, 130V, 130W), **characterised by** the method steps
a) rotating (201) the motor at an operating rotational speed;
b) receiving (202) a signal for slowing down;
c) determining (203) voltages induced in the windings;
d) energising (204) the windings with a braking current at a decreasing frequency, wherein the braking current during braking is a function of the previously determined induced voltages.

2. Method according to claim 1, **characterised in that** the signal for slowing down is given in the form of a preselected rotational speed smaller than the operating rotational speed (302).

3. Method according to claim 2, **characterised in that** the signal (303) for slowing down is given in the form of a preselected rotational speed of zero.

4. Method according to one of the preceding claims, **characterised in that** a load torque is determined to determine the braking current (in 204) from the determined induced voltages.

5. Method according to one of the preceding claims, **characterised in that** on receipt (202) of the signal for slowing down, a limit rotational speed (305) is approached by means of rotational speed regulation, the rotational speed regulator being deactivated when the limit rotational speed is reached.

6. Method according to claim 5, **characterised in that** the limit rotational speed (305) is approached by means of conventional rotational speed regulation, in particular in a ramp-type manner.

7. Method according to claim 5 or 6, **characterised in that** the brushless motor (100) is operated at an operating rotational speed (302) above the limit rotational speed (305), wherein the limit rotational speed is a rotational speed above which the motor is controlled (160) with the aid of a determination of a rotor position by means of measured induced voltages.

8. Method according to one of the preceding claims, **characterised in that** the windings are energised (204) with a braking current at a frequency that decreases in a ramp-type manner.

9. Method according to one of the preceding claims, **characterised in that** after slowing down to the rotational speed of zero induced voltages are measured.

10. Method according to one of the preceding claims, **characterised in that** energisation is stopped after slowing.

11. Method according to one of the preceding claims, **characterised in that** energisation takes place with an essentially sinusoidal current.

12. Method according to claim 11, **characterised in that** the essentially sinusoidal current is generated by means of pulse width modulation.

13. Compressor of a refrigeration appliance, of an air conditioning appliance or of a heat pump, with a brushless motor (100) with windings (130U, 130V, 130W) and a controller (160) for braking the motor starting from an operating rotational speed, **characterised in that** the controller (160) is designed to slow down the brushless motor (100) in a controlled manner with a braking current at a decreasing frequency, wherein the braking current during controlled braking is a function of induced voltages determined before controlled braking.

14. Compressor according to claim 13, equipped to perform the method according to one of claims 1 to 12.

15. Refrigeration appliance, air conditioning appliance or heat pump with a compressor according to one of claims 13 or 14.

## Revendications

1. Procédé de décélération du compresseur d'un appareil frigorifique, d'un appareil de climatisation ou d'une pompe à chaleur, le compresseur comportant un moteur sans balais (100) avec des enroulements (130U, 130V, 130W), **caractérisé par** les étapes de procédé suivantes:
a) rotation (201) du moteur à un régime de service;
b) obtention (202) d'un signal pour la décélération;
c) détection (203) de tensions induites dans les enroulements;
d) alimentation (204) des enroulements avec un courant de décélération avec une fréquence décroissante, le courant de décélération étant, pendant la décélération, dépendant des tensions induites précédemment détectées.

2. Procédé selon la revendication 1, **caractérisé en ce que** le signal de décélération est produit sous forme d'un régime présélectionné plus petit que le régime de service (302).

3. Procédé selon la revendication 2, **caractérisé en ce que** le signal (303) de décélération est nul sous forme d'un régime présélectionné.

4. Procédé selon l'une des revendications précédentes, **caractérisé en ce que** pour la détermination du courant de décélération (en 204) à partir des tensions induites détectées, un couple résistant est détecté.

5. Procédé selon l'une des revendications précédentes, **caractérisé en ce qu'**après l'obtention (202) du signal de décélération un démarrage d'un régime limite (305) se produit au moyen d'un réglage du régime, qui est coupé quand le régime limite est atteint.

6. Procédé selon la revendication 5, **caractérisé en ce que** le démarrage du régime limite (305) se produit au moyen d'un réglage du régime conventionnel, en particulier en forme de rampe.

7. Procédé selon la revendication 5 ou 6, **caractérisé en ce que** le moteur sans balais (100) marche à un régime de service (302) supérieur au régime limite (305), le régime limite étant un régime au-dessus duquel la première commande (160) du moteur survient à l'aide de la détermination de la position du rotor au moyen des tensions induites mesurées.

8. Procédé selon l'une des revendications précédentes, **caractérisé en ce que** l'alimentation (204) des enroulements avec un courant de décélération se produit à une fréquence à rampe décroissante.

9. Procédé selon l'une des revendications précédentes, **caractérisé en ce qu'**après une décélération sur régime nul, se produit une mesure des tensions induites.

10. Procédé selon l'une des revendications précédentes, **caractérisé en ce qu'**après la décélération l'alimentation est coupée.

11. Procédé selon l'une des revendications précédentes, **caractérisé en ce que** l'alimentation s'effectue avec un courant de forme essentiellement sinusoïdale.

12. Procédé selon la revendication 11, **caractérisé en ce que** le courant de forme essentiellement sinusoïdale est produit au moyen d'une modulation d'impulsions en largeur.

13. Compresseur d'un appareil frigorifique, d'un appareil de climatisation ou d'une pompe à chaleur, avec un moteur sans balais (100) muni d'enroulements (130U, 130V, 130W) et d'une commande (160) pour la décélération du moteur à partir d'un régime de service, **caractérisé en ce que** la commande (160) est prévue pour décélérer de manière contrôlée le moteur sans balais (100) avec un courant de décélération à fréquence décroissante, le courant de décélération étant, pendant la décélération contrôlée, dépendant des tensions induites détectées avant la décélération contrôlée.

14. Compresseur selon la revendication 13 équipé pour effectuer le procédé selon l'une des revendications 1 à 12.

15. Appareil frigorifique, appareil de climatisation ou pompe à chaleur muni d'un compresseur selon l'une des revendications 13 ou 14.
